# EUROPÄISCHE PATENTSCHRIFT

(11) **EP 1 043 184 B1**
(45) Veröffentlichungstag und Bekanntmachung des Hinweises auf die Patenterteilung: **01.09.2004**
(21) Anmeldenummer: 00102910.7
(22) Anmeldetag: 12.02.2000
(51) Int. Cl.: B60K 5/12, G10K 11/24

(54) **Antriebsaggregat**
Drive unit
Dispositif d'entraînement

(30) Priorität: 07.04.1999 DE 19915591
(43) Veröffentlichungstag der Anmeldung: 11.10.2000
(73) Patentinhaber: Dr.Ing. h.c.F. Porsche Aktiengesellschaft, 70435 Stuttgart (DE)
(72) Erfinder: Gerhard, Hans-Martin, 71711 Steinheim (DE); Jablonka, Helmut, 75417 Mühlacker (DE); Von Sivers, Rolf, 71287 Weissach-Flacht (DE)

(56) Entgegenhaltungen:
- DE-A- 19 704 376

## Beschreibung

Die Erfindung bezieht sich auf ein Antriebsaggregat, insbesondere eine mit Lagern, Stützen oder dgl. in einem Kraftfahrzeug, vorzugsweise Personenkraftwagen festgelegten Brennkraftmaschine.

Produkte mit akustisch wahrnehmbarer Klangstrahlung werden dann günstig beurteilt, wenn ihre Klangwirkung für das menschliche Gehör angenehm ist. Dies gilt vor allem für Personenkraftwagen, die mit Brennkraftmaschinen angetrieben werden und deren Insassen, namentlich Fahrer dem von der Brennkraftmaschine induziertem Klangaufbau im Fahrgastraum besondere Bedeutung zumessen. Die Güte des Klangaufbaus einer Brennkraftmaschine ist qualitätsrelevant und durch Nutzung der Kenntnisse des technischen Fachgebiets Geräusch, Vibration, Rauhigkeit - Noise, Vibration, Harshness (NVH) - optimierbar.

Bei einer bekannten Brennkraftmaschine - EP 0 297 226 -, eingebaut in einen Personenkraftwagen ist zwischen ihr und einer Stirnwand des Aufbaus eine Drehmomentstütze vorgesehen. Mit dieser Ausführung wird zwar erreicht, daß die Anregung der Brennkraftmaschine im Fahrbetrieb gut gedämpft ist, jedoch werden keine gezielten akustischen Effekte für die Insassen des Personenkraftwagens generiert.

Es ist daher Aufgabe der Erfindung, an einem Personenkraftwagen zwischen Brennkraftmaschine und Aufbau solche Vorkehrungen zu treffen, daß vor allem die im Fahrgastraum von den Insassen wahrnehmbare Klangstruktur angenehm ist, und besagte Insassen definierte Toninformationen erhalten.

Erfindungsgemäß wird diese Aufgabe durch die Merkmale des Patentanspruchs 1 erzielt. Weitere, die Erfindung ausgestaltende Merkmale sind in den Unteransprüchen enthalten.

Die mit der Erfindung hauptsächlich erzielten Vorteile sind darin zu sehen, daß durch die Klangstütze motormechanische Geräusche an den Fahrgastraum angebunden sind, wodurch die Insassen des Kraftfahrzeugs insbesondere der Fahrer eine positive psychoakustische Rückmeldung der Fahrzustände erhält. Darüber hinaus werden Frequenzen übertragen, die klangtechnische Relevanz besitzen, wobei signifikante Störgeräusche abgekoppelt werden können.

Die Klangstütze umfaßt durch das Elastikelement, die Feder und das Stabglied leicht herstellbare Bauteile, und sie läßt sich auch mit vertretbarem Aufwand mit der Brennkraftmaschine und dem Aufbau verbinden. Bei dem einen Elastikelement sind beiderseits einer fest an der Brennkraftmaschine angeordneten Tragvorrichtung Elastikkörper vorgesehen, an denen Stützglieder des Stabgliedes angebracht sind. Außerdem wird das andere Elastikelement durch ein Stützglied gebildet, das auf beiden Seiten mit einem ersten Elastikkörper und einem zweiten Elastikkörper versehen ist, an dessen fest mit der Brennkraftmaschine verbundene Tragvorrichtungen anliegen. Schließlich weist der erste Elastikkörper eine andere Kennung auf, als der zweite Elastikkörper.

In der Zeichnung werden Ausführungsbeispiele der Erfindung gezeigt, die nachstehend näher beschrieben sind.

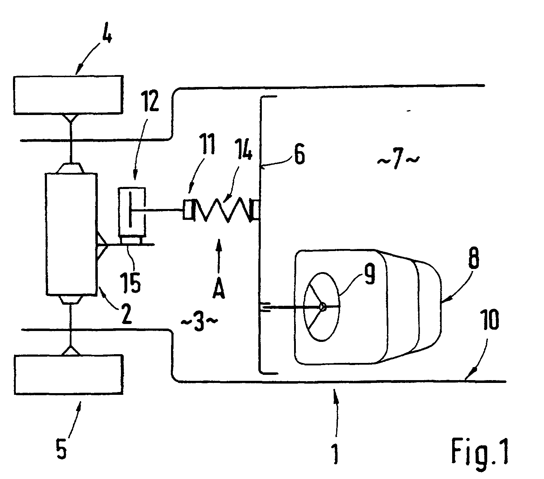

Es zeigen
- Fig. 1: eine schematische Ansicht von oben auf einen Personenkraftwagen mit der erfindungsgemäßen Brennkraftmaschine,
- Fig. 2: eine Ansicht in Pfeilrichtung A der Fig. 1,
- Fig. 3: eine Ansicht entsprechend Fig. 2 mit einer anderen Ausführungsform.

Ein Personenkraftwagen 1 umfaßt eine quer eingebaute Brennkraftmaschine 2 - Reihenbauweise -, die in einem Aggregateraum 3 angeordnet ist und lenkbare Räder 4, 5 des Personenkraftwagens antreibt. Der Aggregateraum 3 ist im Bug des Personenkraftwagens 1 untergebracht und durch eine Wandung 6 von einem Fahrgastraum 7 getrennt, in dem ein Sitz 8 und ein Lenkrad 9 angedeutet sind. Die Wandung 6 ist Bestandteil eines Aufbaus 10 und kann mit einem Wasserkasten, einem Querträger oder dgl. versehen sein.

Die Brennkraftmaschine 2 ist mittels Lagern, Drehmomentstützen - nicht dargestellt - am Aufbau 10 gehalten, wobei sich zwischen der Brennkraftmaschine 2 und der Wandung 6 ggf. dem Wasserkasten oder dem Querträger eine Klangstütze 11 erstreckt. Mit der Klangstütze 11 wird motormechanischer Körperschall in den Aufbau 10 übertragen, und zwar zur gezielten Wahrnehmung durch die Insassen, insbesondere den Fahrer im Fahrgastraum 7.

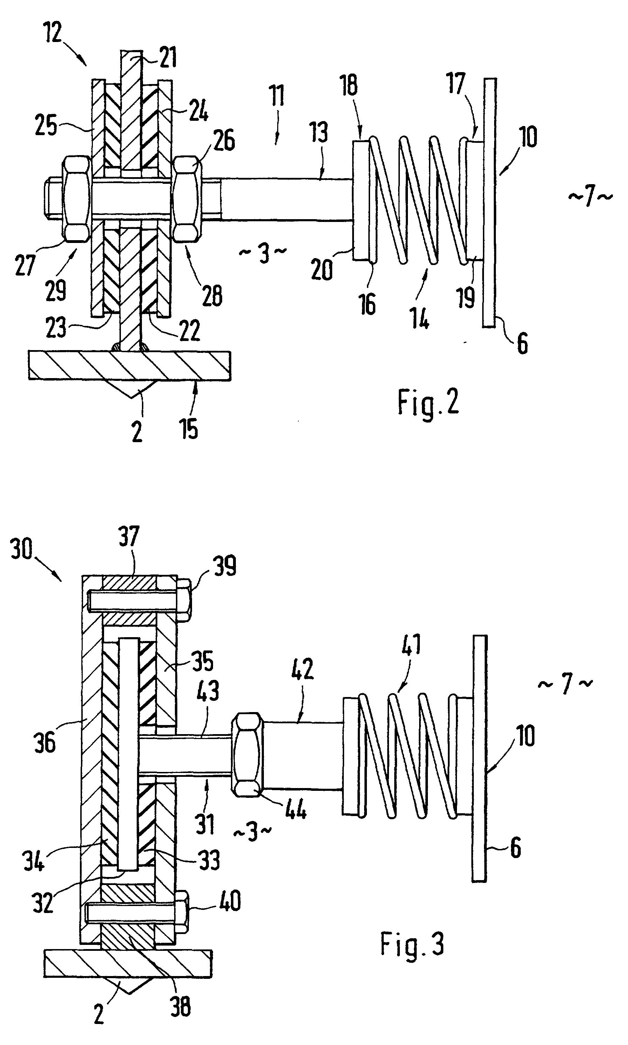

Die Klangstütze 11 umfaßt gemäß Fig. 2 ein Elastikelement 12, ein Stabglied 13 und eine Feder 14. Das Elastikelement 12 ist an der Brennkraftmaschine 2 mittels einer Konsole 15 gehalten; die Feder 14 an der Wandung 6 des Aufbaus 10. Zwischen Feder 14 und Elastikelement 12 ist ein beispielsweise aus Metall bestehendes, einen kreisrunden Querschnitt aufweisendes Stabglied 13 wirksam. Die Feder 14 ist eine Schraubenfeder 16, an deren Enden 17, 18 eine erste Aufnahme 19 und eine zweite Aufnahme 20 angebracht sind. Beide Aufnahmen 19, 20 sind flache kreisrunde Teile, wobei die erste Aufnahme 19 mit der Wandung 6 und die zweite Aufnahme 20 mit dem Stabglied 13 verbunden ist.

Das Elastikelement 12 umfaßt eine plattenartige Tragvorrichtung 21 - aus Metall, Kunststoff oder dgl. -, die fest mit der Brennkraftmaschine 2 verbunden ist und beiderseits mit Elastikkörpern 22, 23 versehen ist. Die Elastikkörper 22, 23 bestehen beispielsweise aus Gummi oder einem gummiartigen Elastomer und werden unmittelbar von plattenartigen Stützgliedern 24, 25 begrenzt, die bezüglich Werkstoff wie die Tragvorrichtung 21 ausgebildet sein können. Die Elastikkörper 22, 23 sind stoffschlüssig - Kleben, Vulkanisieren - mit der Tragvorrichtung 21 bzw. den Stützgliedern 24, 25 verbunden. An den Stützgliedern 24, 25 liegen als Stellschrauben 26, 27 ausgebildete Anschläge 28, 29 an, die mit dem das Elastikelement 12 durchdringenden Stabglied 13 über Gewinde zusammenwirken.

Ein weiteres Elastikelement 30 wirkt in etwa wie das Elastikelement 12; indessen weist es einen anderen konstruktiven Aufbau auf. So umfaßt ein Stabglied 31 ein mit dem zuletzt genannten verbundenes plattenartiges Stützglied 32, das beiderseits mit einem ersten Elastikkörper 33 und einem zweiten Elastikkörper 34 verbunden ist. Auch diese Elastikkörper 33, 34 können aus Gummi oder einem gummiartigen Elastomer hergestellt sein, wobei an ihren dem Stützglied 32 abgewandten Seiten plattenartige Tragvorrichtungen 35, 36 angreifen, die fest mit der Brennkraftmaschine 2 verbunden sind. Die Elastikkörper 33, 34 sind mit dem Stützglied 32 und der Tragvorrichtung 35, 36 stoffschlüssig verbunden. Außerdem weist der erste Elastikkörper 33 eine andere Kennung auf, als der zweite Elastikkörper 34, anders ausgedrückt der Elastikkörper 33 ist vor allem zur Aufnahme von Schubbelastungen ausgelegt; der Elastikkörper 34 zur Aufnahme von Zugbelastungen.

Die Tragvorrichtungen 35, 36 sind unter Vermittlung von Distanzstücken 37, 38 zusammengesetzt und vermittels Schrauben 39, 40 miteinander verbunden. Schließlich ist das Stabglied 31 mit einer Schraubenfeder 41 verbunden, und es weist zwei längs verschiebliche Stabelemente 42, 43 auf, die mit einer Stellschraube 44 lagemäßig festsetzbar sind.

## Patentansprüche

1. Kraftfahrzeug mit einer mit Lagern, Stützen oder dergleichen festgelegten Brennkraftmaschine, die in einem Aggregateraum gelagert ist, welcher Aggregateraum von einem Fahrgastraum durch eine Wandung eines Aufbaues getrennt ist, **dadurch gekennzeichnet, daß** zwischen der Brennkraftmaschine (2) und der Wandung (6) eine Klangstütze (11) vorgesehen ist, über die motormechanischer Körperschall in den Aufbau (10) zur gezielten Wahrnehmung durch Insassen im Fahrgastraum (7) übertragen wird.

2. Kraftfahrzeug nach Anspruch 1, **dadurch gekennzeichnet, daß** die Klangstütze (11) zumindest ein Elastikelement (12) und eine Feder (14) umfaßt.

3. Kraftfahrzeug nach Anspruch 2, **dadurch gekennzeichnet, daß** das Elastikelement (12) mit der Brennkraftmaschine (2) und die Feder (14) mit der Wandung (6) des Aufbaus (10) zusammenarbeitet.

4. Kraftfahrzeug nach einem oder mehreren der vorangehenden Ansprüche, **dadurch gekennzeichnet, daß** die Klangstütze (11) ein Stabglied (13) umfaßt, das zwischen dem Elastikelement (12) und der Feder (14) wirksam ist.

5. Kraftfahrzeug nach einem oder mehreren der vorangehenden Ansprüche, **dadurch gekennzeichnet, daß** die Feder (14) eine Schraubenfeder (16) ist, deren Enden (17, 18) mit einer ersten Aufnahme (19) und einer zweiten Aufnahme (20) versehen sind.

6. Kraftfahrzeug nach einem oder mehreren der vorangehenden Ansprüche, **dadurch gekennzeichnet, daß** die erste Aufnahme (19) mit der Wandung (6) des Aufbaus (10) und die zweite Aufnahme (20) mit dem Stabglied (13) verbunden ist.

7. Kraftfahrzeug nach Anspruch 2, **dadurch gekennzeichnet, daß** das Elastikelement (12) eine Tragvorrichtung (21) umfaßt, die beiderseits mit Elastikkörpern (22, 23) versehen ist, an denen Stützglieder (24, 25) anliegen, die mit Anschlägen (28, 29) des das Elastikelement (12) durchdringenden Stabgliedes (13) zusammenwirken.

8. Kraftfahrzeug Anspruch 7, **dadurch gekennzeichnet, daß** die Tragvorrichtung (21) fest mit der Brennkraftmaschine (2) verbunden ist.

9. Kraftfahrzeug nach Anspruch 8, **dadurch gekennzeichnet, daß** die Anschläge (28, 29) als Stellschrauben (26, 27) des Stabgliedes (13) ausgeführt sind.

10. Kraftfahrzeug nach den Ansprüchen 2 und 4, **dadurch gekennzeichnet, daß** das Stabglied (31) des Elastikelements (30) ein Stützglied (32) umfaßt, das beiderseits mit einem ersten Elastikkörper (33) und einem zweiten Elastikkörper (34) versehen ist, an denen fest mit der Brennkraftmaschine (2) verbundene Tragvorrichtungen (35, 36) anliegen.

11. Kraftfahrzeug nach Anspruch 10, **dadurch gekennzeichnet, daß** der erste Elastikkörper (33) eine andere Kennung als der zweite Elastikkörper (34) aufweist.

12. Kraftfahrzeug nach Anspruch 11, **dadurch gekennzeichnet, daß** der erste Elastikkörper (33) für Schubbelastung und der zweite Elastikkörper (34) für Zugbelastung ausgelegt ist.

13. Kraftfahrzeug nach Anspruch 10, **dadurch gekennzeichnet, daß** die Tragvorrichtungen (35, 36) unter Vermittlung von Distanzstücken (37, 38) zusammengesetzt und vermittels von Schrauben (39, 40) miteinander verbunden sind.

14. Kraftfahrzeug nach Anspruch 10, **dadurch gekennzeichnet, daß** das Stabglied (31) durch zwei längsverschiebliche Stabelemente (42, 43) und eine Stellschraube (44) gebildet ist.

## Claims

1. A motor vehicle with an internal-combustion engine which is fixed by bearings, supports or the like and which is mounted in a unit space, which unit space is separated from a passenger compartment by a wall of a body, **characterized in that** a sound support (11), by way of which structure-borne mechanical engine noise is transmitted to the body (10) for the intended perception by occupants in the passenger compartment (7), is provided between the internal-combustion engine (2) and the wall (6).

2. A motor vehicle according to Claim 1, **characterized in that** the sound support (11) comprises at least one resilient element (12) and one spring (14).

3. A motor vehicle according to Claim 2, **characterized in that** the resilient element (12) co-operates with the internal-combustion engine (2) and the spring (14) co-operates with the wall (6) of the body (10).

4. A motor vehicle according to one or more of the preceding Claims, **characterized in that** the sound support (11) comprises a rod member (13) which is active between the resilient element (12) and the spring (14).

5. A motor vehicle according to one or more of the preceding Claims, **characterized in that** the spring (14) is a helical spring (16), the ends (17, 18) of which are provided with a first receiving means (19) and a second receiving means (20).

6. A motor vehicle according to one or more of the preceding Claims, **characterized in that** the first receiving means (19) is connected to the wall (6) of the body (10) and the second receiving means (20) is connected to the rod member (13).

7. A motor vehicle according to Claim 2, **characterized in that** the resilient element (12) comprises a carrier device (21) which is provided on both sides with resilient bodies (22, 23) against which support members (24, 25) rest which co-operate with stops (28, 29) of the rod member (13) passing through the resilient element (12).

8. A motor vehicle according to Claim 7, **characterized in that** the carrier device (21) is connected to the internal-combustion engine (2) in a fixed manner.

9. A motor vehicle according to Claim 8, **characterized in that** the stops (28, 29) are constructed as set screws (26, 27) of the rod member (13).

10. A motor vehicle according to Claims 2 and 4, **characterized in that** the rod member (31) of the resilient element (30) comprises a support member (32) which is provided on both sides with a first resilient body (33) and a second resilient body (34), carrier devices (35, 36) connected to the internal-combustion engine (2) in a fixed manner resting against the said resilient bodies.

11. A motor vehicle according to Claim 10, **characterized in that** the first resilient body (33) has a different characteristic from the second resilient body (34).

12. A motor vehicle according to Claim 11, **characterized in that** the first resilient body (33) is intended for thrust loading and the second resilient body (34) is intended for tensile loading.

13. A motor vehicle according to Claim 10, **characterized in that** the carrier devices (35, 36) are assembled with the interposition of spacer members (37, 38) and are connected to each other by means of bolts (39, 40).

14. A motor vehicle according to Claim 10, **characterized in that** the rod member (31) is formed by two longitudinally displaceable rod elements (42, 43) and a set screw (44).

## Revendications

1. Véhicule automobile avec un moteur à combustion interne, fixé par des paliers, appuis ou similaire, qui est monté dans une enceinte de moteur , laquelle enceinte est séparée d'un habitacle par une paroi d'une carrosserie, **caractérisé en ce qu'**il est prévu, entre le moteur à combustion interne (2) et la paroi (6), un appui phonique (11) par lequel le bruit de structure, dû à la mécanique du moteur, est transmis dans la carrosserie (10) en vue de la perception contrôlée par les passagers se trouvent dans l'habitacle (7).

2. Véhicule automobile selon la revendication 1, **caractérisé en ce que** l'appui phonique (11) comprend au moins un élément élastique (12) et un ressort (14).

3. Véhicule automobile selon la revendication 2, **caractérisé en ce que** l'élément élastique (12) coopère avec le moteur à combustion interne (2), et le ressort (14) avec la paroi (6) de la carrosserie (10).

4. Véhicule automobile selon une ou plusieurs des revendications précédentes, **caractérisé en ce que** l'appui phonique (11) comprend un à barre (13) qui opère entre l'élément élastique (12) et le ressort (14).

5. Véhicule automobile selon une ou plusieurs des revendications précédentes, **caractérisé en ce que** le ressort (14) est un ressort hélicoïdal (16) dont les extrémités (17, 18) sont pourvues d'un premier logement (19) et d'un deuxième logement (20).

6. Véhicule automobile selon une ou plusieurs des revendications précédentes, **caractérisé en ce que** le premier logement (19) est relié à la paroi (6) de la carrosserie (10) et le deuxième logement (20) à l'organe à barre (13).

7. Véhicule automobile selon la revendication 2, **caractérisé en ce que** l'élément élastique (12) comprend un dispositif porteur (21) qui est pourvu, des deux côtés, de corps élastiques (22, 23) contre lesquels s'appliquent des organes d'appui (24, 25) qui coopèrent avec des butées (28, 29) de l'organe à barre (13) traversant l'élément élastique (12).

8. Véhicule automobile selon la revendication 7, **caractérisé en ce que** le dispositif porteur (21) est solidaire du moteur à combustion interne (2).

9. Véhicule automobile selon la revendication 8, **caractérisé en ce que** les butées (28, 29) sont réalisées comme vis de réglage (26, 27) de l'organe à barre (13).

10. Véhicule automobile selon les revendications 2 et 4, **caractérisé en ce que** l'organe à barre (31) de l'élément élastique (30) comprend un organe d'appui (32) qui est pourvu, des deux côtés, d'un premier corps élastique (33) et d'un deuxième corps élastique (34), contre lesquels s'appliquent des dispositifs porteurs (35, 36) solidaires du moteur à combustion interne (2).

11. Véhicule automobile selon la revendication 10, **caractérisé en ce que** le premier corps élastique (33) présente une caractéristique différente de celle du deuxième corps élastique (34).

12. Véhicule automobile selon la revendication 11, **caractérisé en ce que** le premier corps élastique (33) est conçu pour une contrainte de poussée et le deuxième corps élastique (34) pour une contrainte de traction.

13. Véhicule automobile selon la revendication 10, **caractérisé en ce que** les dispositifs porteurs (35, 36) sont assemblés par l'intermédiaire d'écarteurs (37, 38) et reliés entre eux au moyen de vis (39, 40).

14. Véhicule automobile selon la revendication 10, **caractérisé en ce que** l'organe à barre (31) est formé par deux éléments de barre (42, 43) coulissant longitudinalement et par une vis de réglage (44).
